# EUROPEAN PATENT APPLICATION

(11) **EP 2 354 679 A2**
(43) Date of publication of application: **10.08.2011**
(21) Application number: 11151590.4
(22) Date of filing: 20.01.2011
(51) Int. Cl.: F24D 11/00, F24D 19/10, F24H 9/12

(54) **Water valve device, and water heating apparatus for a solar water heating system having the same**

(30) Priority: 26.01.2010 TW 099102086
(71) Applicant: Wang, Hsiang Nan, Wufong Dist. Taichung City, Chinese Taipei (CN)
(72) Inventor: Wang, Hsiang Nan, Wufong Dist. Taichung City, Chinese Taipei (CN)
(74) Representative: Texier, Christian

(57) **Abstract**

A water valve device (100) includes: a valve unit (20) having an input port (2111) for receiving solar heated water from a solar water heating system (900), a first output port (2112) connected to a cold water inlet (11) of a water heating device (10) using non-solar energy, and a second output port (2113); a temperature sensor (22) for sensing temperature of water flowing through the input port (2111) of the valve unit (20) to generate a temperature sensing signal corresponding to the temperature; and a controller (23) controlling, based on the temperature sensing signal from the temperature sensor (22), the valve unit (20) to operate in a first state, where the input port (2111) is in fluid communication with the first output port (2112), when the temperature is lower than a predetermined temperature, or in a second state, where the input port (2111) is in fluid communication with the second output port (2113), when the temperature is not lower than the predetermined temperature.

## Description

The invention relates to a water valve device, and more particularly to a water heating apparatus having a water valve device for a solar water heating system.

In a conventional water heating system using solar energy and auxiliary electric energy, a solar collector is used to heat water in a reservoir. In addition, an auxiliary electric heater, such as an electrothermal bar, is disposed in the reservoir to heat the water in the reservoir if the solar heated water is not sufficiently hot.

In such a configuration, all water in the reservoir is heated by the electric heater when necessary. However, only a part of the water heated by the electric heater is used at a time, thereby resulting in waste of electric energy. Furthermore, heating using the electric heater easily results in generation of scales in the reservoir after a period of time.

Therefore, an object of the present invention is to provide a water valve device, and a water heating apparatus having the same that can overcome the aforesaid drawbacks of the prior art.

According to one aspect of the present invention, there is provided a water valve device adapted for use with a water heating system using solar energy and non-solar auxiliary energy. The water heating system includes a reservoir for solar heated water with a cold water inlet and a solar heated water outlet, and a water heating device operable to heat water using non-solar auxiliary energy whenever water flows through the water heating device, and having a cold water inlet and a hot water outlet. The water valve device comprises:
a valve unit having an input port adapted to be connected to the solar heated water outlet of the reservoir of the water heating system, a first output port adapted to be connected to the cold water inlet of the water heating device of the water heating system, and a second output port, the valve unit being operable in one of a first state, where the input port is in fluid communication with the first output port, and a second state, where the input port is in fluid communication with the second output port;
a temperature sensor for sensing temperature of water flowing through the input port of the valve unit to generate a temperature sensing signal corresponding to the temperature; and
a controller coupled to the temperature sensor and the valve unit, receiving the temperature sensing signal from the temperature sensor, and operable to control the valve unit based on the temperature sensing signal to operate in the first state upon detecting that the temperature is lower than a predetermined temperature or in the second state upon detecting that the temperature is not lower than the predetermined temperature.

According to another aspect of the present invention, there is provided a water heating apparatus adapted for use with a solar water heating system. The solar water heating system includes a reservoir for solar heated water with a cold water inlet and a solar heated water outlet. The water heating apparatus comprises:
a water heating device operable to heat water using non-solar energy whenever water flows through the water heating device, and having a cold water inlet and a hot water outlet; and
a water valve device including
   a valve unit having an input port adapted to be connected to the solar heated water outlet of the reservoir of the solar water heating system, a first output port connected to the cold water inlet of the water heating device, and a second output port, the valve unit being operable in one of a first state, where the input port is in fluid communication with the first output port, and a second state, where the input port is in fluid communication with the second output port,
   a temperature sensor for sensing temperature of water flowing through the input port of the valve unit to generate a temperature sensing signal corresponding to the temperature, and
   a controller connected electrically to the temperature sensor and the valve unit, receiving the temperature sensing signal from the temperature sensor, and operable to control the valve unit based on the temperature sensing signal to operate in the first state upon detecting that the temperature is lower than a predetermined temperature or in the second state upon detecting that the temperature is not lower than the predetermined temperature.

Other features and advantages of the present invention will become apparent in the following detailed description of the preferred embodiments with reference to the accompanying drawings, of which:
Figure 1 is a schematic view showing the first preferred embodiment of a water heating apparatus for a solar water heating system according to the present invention;
Figure 2 is a schematic circuit block diagram illustrating a water valve device of the first preferred embodiment; and
Figure 3 is a schematic view showing the second preferred embodiment of a water heating apparatus for a solar water heating system according to the present invention; and
Figure 4 is a schematic circuit block diagram illustrating a water valve device of the second preferred embodiment.

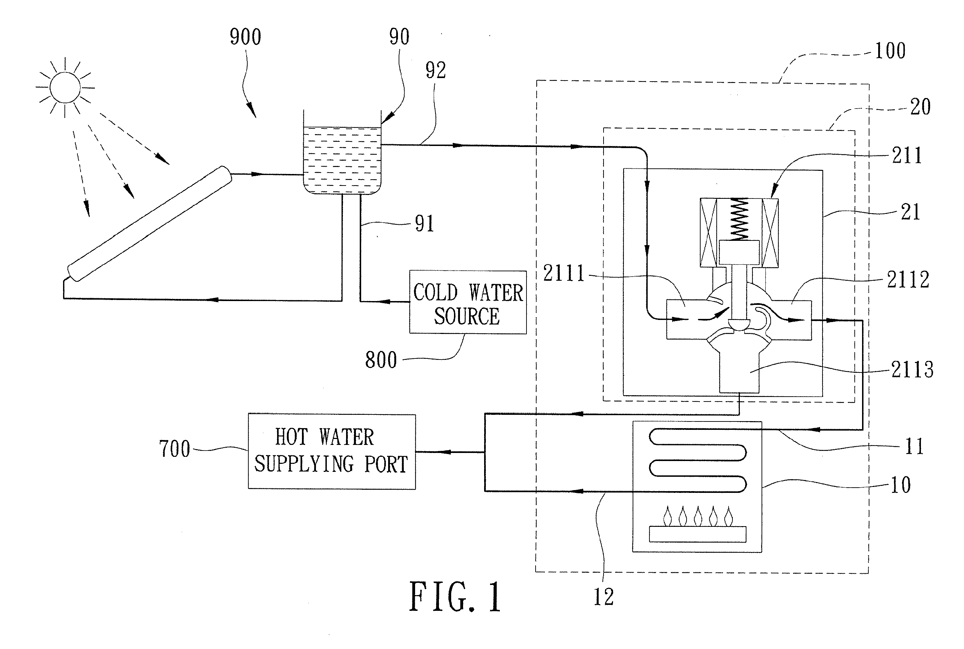

Referring to Figure 1, the first preferred embodiment of a water heating apparatus 100 according to the present invention is shown to be adapted for use with a solar water heating system 900, and serves as an auxiliary heating mechanism for the solar water heating system 900. The solar water heating system 900 includes a reservoir 90 for receiving solar heated water. The reservoir 90 has a cold water inlet 90 connected to a cold water source 800, and a solar heated water outlet 92. The water heating apparatus 100 includes a water heating device 10, and a water valve device 20.

In this embodiment, the water heating device 10 is a constant-temperature water heater. In other embodiments, the water heating device 10 can be an instantaneous water heater. The water heating device 10 is operable to heat water using non-solar energy, such as gas, whenever water flows through the water heating device 10. The water heating device 10 has a cold water inlet 11, and a hot water outlet 12 adapted to be connected to a hot water supplying port 700 using a water pipe (not show).

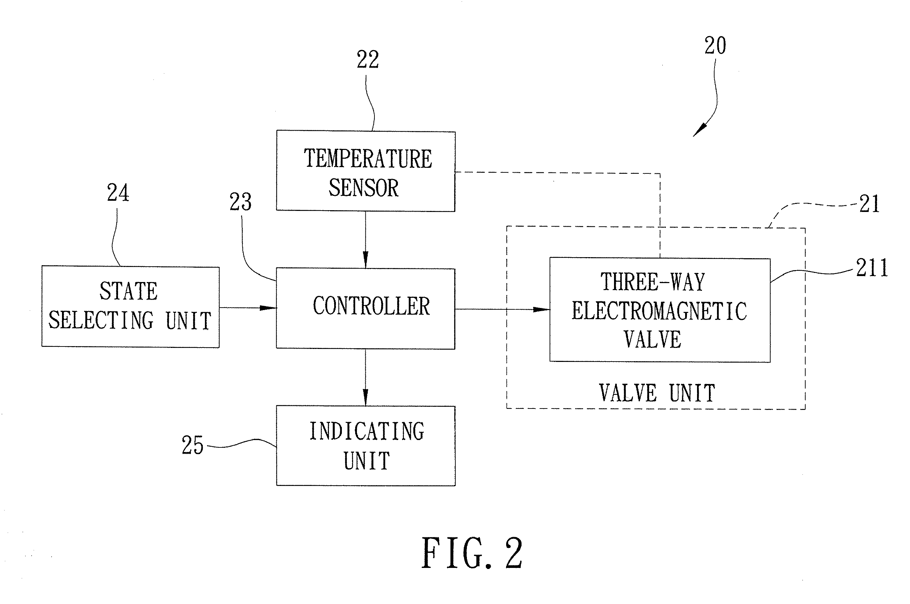

Referring further to Figure 2, the water valve device 20 includes a valve unit 21, a temperature sensor 22, a controller 23, a state selecting unit 24, and an indicating unit 25.

In this embodiment, as shown in Figure 1, the valve unit 21 includes a three-way electromagnetic valve 211. The three-way electromagnetic valve 211 has three ports 2111, 2112, 2113 that serve respectively as an input port, a first output port and a second output port of the valve unit 21. The input port, i.e., the port 2111 of the three-way electromagnetic valve 211, is adapted to be connected to the solar heated water outlet 92 of the reservoir 90 using a water pipe (not shown). The first output port, i.e., the port 2112 of the three-way electromagnetic valve 211, is connected to the cold water inlet 11 of the water heating device 10 using a water pipe (not shown). The second output port, i.e., the port 2113 of the three-way electromagnetic valve 211, is adapted to be connected to the hot water supplying port 700 using a water pipe (not shown). The valve unit 21 is operable in one of a first state, where the input port is in fluid communication with the first output port, and a second state, where the input is in fluid communication with the second output port. In this embodiment, when the valve unit 21 is in the first state, the port 2111 is in fluid communication with the port 2112. When the valve unit 21 is in the second state, the port 2111 is in fluid communication with the port 2113.

The temperature sensor 22 is used to sense the temperature of water flowing through the input port of the valve unit, i.e., the port 2111 of the three-way electromagnetic valve 211, to generate a temperature sensing signal corresponding to the temperature.

The controller 23 is connected electrically to the temperature sensor 22 and the three-way electromagnetic valve 211. The controller receives the temperature sensing signal from the temperature sensor 22, and is operable to control the valve unit 20 based on the temperature sensing signal to operate in the first state upon detecting that the temperature is lower than a predetermined temperature or in the second state upon detecting that the temperature is not lower than the predetermined temperature. In this embodiment, the controller 23 is a microprocessor.

The state selecting unit 24 is connected electrically to the controller 23. The state selecting unit 24 is operable to output to the controller 23 a state selecting signal corresponding to a desired one of the first and second states of the valve unit 21. Thus, the controller 23 is operable to control, based on the state selecting signal from the state selecting unit 24, the valve unit 21 to operate in the desired one of the first and second states upon receipt of the state selecting signal from the state selecting unit 24.

The indicating unit 25 is connected electrically to the controller 23 for generating various indicating outputs corresponding respectively to the first and second states of the valve unit 21. In this embodiment, the indicating unit 25 includes an LED unit capable of radiating light with different colors corresponding respectively to the first and second states of the valve unit 21.

In use, when water flowing through the input port of the valve unit 21 is not lower than the predetermined temperature, the valve unit 21 is operated in the second state. In this case, the solar heated water in the reservoir 90 flows to the hot water supplying port 700 through the valve unit 21. When water flowing through the input port of the valve unit 21 is lower than the predetermined temperature, the valve unit 21 is operated in the first state. In this case, the solar heated water in the reservoir 90 flows to the hot water supplying port 700 through the valve unit 21 and through the water heating device 10, and is heated by the water heating device 10 when flowing through the water heating device 10.

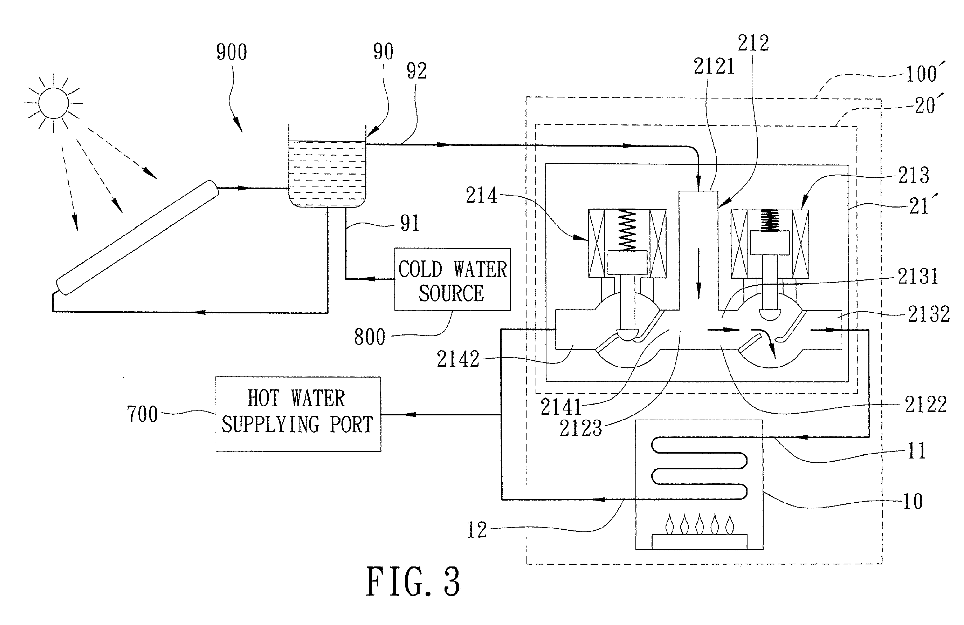

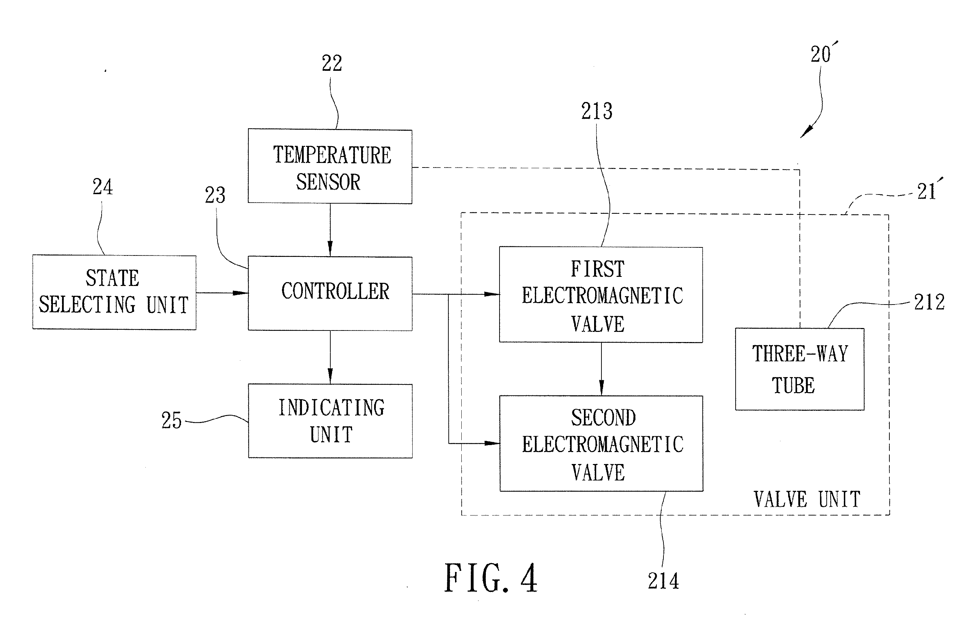

Figures 3 and 4 illustrate the second preferred embodiment of a water heating apparatus 100' according to the present invention, which is a modification of the first preferred embodiment. Unlike the previous embodiment, the valve unit 21' of the water valve device 20' includes a three-way tube 212, a first electromagnetic valve 213, and a second electromagnetic valve 214.

The three-way tube 212 has first, second and third open ends 2121, 2122, 2123. The first open end 2121 serves as the input port of the valve unit 21'.

The first electromagnetic valve 213 is connected electrically to and is controlled by the controller 23. The first electromagnetic valve 213 has an input port 2131 connected to the second open end 2122 of the three-way tube 212, and an output port 2132 that serves as the first output port of the valve unit 21'.

The second electromagnetic valve 214 is connected electrically to and is controlled by the controller 23. The second electromagnetic valve 214 has an input port 2141 connected to the third open end 2123, and an output port 2142 that serves as the second output port of the valve unit 21'.

The controller 23 controls the first and second electromagnetic valves 213, 214 so that the first and second electromagnetic valves 213, 214 remain open and closed, respectively, when the valve unit 21' is in the first state, and that the first and second electromagnetic valves 213, 214 remain closed and open, respectively, when the valve unit 21' is in the second state.

In sum, since the water heating device 10 heats water using gas, the problem of scaling in the aforesaid prior art does not occur. Furthermore, when the valve unit 21, 21' is operated in the first state, only water flowing through the water heating device 10 is heated. Therefore, the water heating apparatus 100, 100' of the present invention can minimize waste of gas.

## Claims

1. A water valve device (20, 20') for a water heating system using solar energy and non-solar auxiliary energy, the water heating system including a reservoir (90) for solar heated water with a cold water inlet (91) and a solar heated water outlet (92), and a water heating device (10) operable to heat water using non-solar auxiliary energy whenever water flows through the water heating device (10), and having a cold water inlet (11) and a hot water outlet (12), said water valve device (20, 20') **characterized by**:
a valve unit (21, 21')having an input port (2111, 2121) adapted to be connected to the solar heated water outlet (92) of the reservoir (90) of the water heating system (900), a first output port (2112, 2132) adapted to be connected to the cold water inlet (11) of the water heating device (10) of the water heating system (900), and a second output port (2113, 2142), said valve unit (21, 21') being operable in one of a first state, where said input port (2111, 2121) is in fluid communication with said first output port (2112, 2132), and a second state, where said input port (2111, 2121) is in fluid communication with said second output port (2113, 2142);
a temperature sensor (22) for sensing temperature of water flowing through said input port (2111, 2121) of said valve unit (21, 21') to generate a temperature sensing signal corresponding to the temperature; and
a controller (23) connected electrically to said temperature sensor (22) and said valve unit (21, 21'), receiving the temperature sensing signal from said temperature sensor (22), and operable to control said valve unit (21, 21') based on the temperature sensing signal to operate in the first state upon detecting that the temperature is lower than a predetermined temperature or in the second state upon detecting that the temperature is not lower than the predetermined temperature.

2. The water valve device (20) as claimed in Claim 1, **characterized in that** said valve unit (21) includes a three-way electromagnetic valve (211) connected electrically to and controlled by said controller (23), and having three ports (2111, 2112, 2113) that serve respectively as said input port, said first output port and said second output port.

3. The water valve device (20') as claimed in Claim 1, **characterized in that**:
said valve unit (21') includes
a three-way tube (212) having first, second and third open ends (2121, 2122, 2123), said first open end (2121) serving as said input port of said valve unit (21'),
a first electromagnetic valve (213) connected electrically to and controlled by said controller (23), said first electromagnetic valve (213) having an input port (2131) connected to said second open end (2122) of said three-way tube (212), and an output port (2132) that serves as said first output port of said valve unit (21'), and
a second electromagnetic valve (214) connected electrically to and controlled by said controller (23), said second electromagnetic valve (214) having an input port (2141) connected to said third open end (2123) of said three-way tube (212), and an output port (2142) that serves as said second output port of said valve unit (21'); and
said controller (23) controls said first and second electromagnetic valves (213, 214) so that said first and second electromagnetic valves (213, 214) remain open and closed, respectively, when said valve unit (21') is in the first state, and that said first and second electromagnetic valves (213, 214) remain closed and open, respectively, when said valve unit (21') is in the second state.

4. The water valve device (20, 20') as claimed in Claim 1, further **characterized by** a state selecting unit (24) connected electrically to said controller (23) and operable to output to said controller (23) a state selecting signal corresponding to a desired one of the first and second states of said valve unit (21, 21'), said controller (23) being operable based on the state selecting signal to control said valve unit (21, 21') to operate in the desired one of the first and second states upon receipt of the state selecting signal from said state selecting unit (24).

5. The water valve device (20, 20') as claimed in Claim 1, further **characterized by** an indicating unit (25) connected electrically to said controller (23) for generating various indicating outputs corresponding respectively to the first and second states of said valve unit (21, 21').

6. A water heating apparatus (100, 100') for a solar water heating system (900), the solar water heating system (900) including a reservoir (90) for solar heated water with a cold water inlet (91) and a solar heated water outlet (92), said water heating apparatus (100, 100') **characterized by**:
a water heating device (10) operable to heat water using non-solar energy whenever water flows through said water heating device (10), and having a cold water inlet (11) and a hot water outlet (12); and
a water valve device (20, 20') including
a valve unit (21, 21') having an input port (2111, 2121) adapted to be connected to the solar heated water outlet (92) of the reservoir (90) of the solar water heating system (900), a first output port (2112, 2132) connected to said cold water inlet (11) of said water heating device (10), and a second output port (2113, 2142), said valve unit (21, 21') being operable in one of a first state, where said input port (2111, 2121) is in fluid communication with said first output port (2112, 2132), and a second state, where said input port (2111, 2121) is in fluid communication with said second output port (2113, 2142),
a temperature sensor (22) for sensing temperature of water flowing through said input port (2111, 2121) of said valve unit (21, 21') to generate a temperature sensing signal corresponding to the temperature, and
a controller (23) connected electrically to said temperature sensor (22) and said valve unit (21, 21'), receiving the temperature sensing signal from said temperature sensor (22), and operable to control said valve unit based on the temperature sensing signal to operate in the first state upon detecting that the temperature is lower than a predetermined temperature or in the second state upon detecting that the temperature is not lower than the predetermined temperature.

7. The water heating apparatus (100) as claimed in Claim 6, **characterized in that** said valve unit (21) of said water valve device (20) includes a three-way electromagnetic valve (211) connected electrically to and controlled by said controller (23), and having three ports (2111, 2112, 2113) that serve respectively as said input port, said first output port and said second output port.

8. The water heating apparatus (100') as claimed in Claim 6, **characterized in that**:
said valve unit (21') of said water valve device (20') includes
a three-way tube (212) having first, second and third open ends (2121, 2122, 2123), said first open end (2121) serving as said input port of said valve unit (21'),
a first electromagnetic valve (213) connected electrically to and controlled by said controller (23), said first electromagnetic valve (213) having an input port (2131) connected to said second open end (2122) of said three-way tube (212), and an output port (2132) that serves as said first output port of said valve unit (21'), and
a second electromagnetic valve (214) connected electrically to and controlled by said controller (23), said second electromagnetic valve (214) having an input port (2141) connected to said third open end (2123) of said three-way tube (212), and an output port (2142) that serves as said second output port of said valve unit (21'); and
said controller (23) of said water valve device (20') controls said first and second electromagnetic valves (213, 214) so that said first and second electromagnetic valves (213, 214) remain open and closed, respectively, when said valve unit (21') is in the first state, and that said first and second electromagnetic valves (213, 214) remain closed and open, respectively, when said valve unit (21') is in the second state.

9. The water heating apparatus (100, 100') as claimed in Claim 6, **characterized in that** said water valve device (20, 20') further includes a state selecting unit (24) connected electrically to said controller (23) and operable to output to said controller (23) a state selecting signal corresponding to a desired one of the first and second states of said valve unit (21, 21'), said controller (23) being operable based on the state selecting signal to control said valve unit (21, 21') to operate in the desired one of the first and second states upon receipt of the state selecting signal from said state selecting unit (24).

10. The water heating apparatus (100, 100') as claimed in Claim 6, **characterized in that** said water valve device (20, 20') further includes an indicating unit (25) connected electrically to said controller (23) for generating various indicating outputs corresponding respectively to the first and second states of said valve unit (21, 21').
